# EUROPÄISCHE PATENTSCHRIFT

(11) **EP 0 655 116 B1**
(45) Veröffentlichungstag und Bekanntmachung des Hinweises auf die Patenterteilung: **29.05.1996**
(21) Anmeldenummer: 93917773.9
(22) Anmeldetag: 10.08.1993
(51) Int. Cl.: F16K 17/04, F16K 17/08

(54) **VENTIL, INSBESONDERE DRUCKBEGRENZUNGSVENTIL**
VALVE, IN PARTICULAR A PRESSURE-RELIEF VALVE
SOUPAPE, NOTAMMENT SOUPAPE DE LIMITATION DE PRESSION

(30) Priorität: 17.08.1992 DE 4227221
(43) Veröffentlichungstag der Anmeldung: 31.05.1995
(73) Patentinhaber: "Test-Fuchs", Ing. Fritz Fuchs Gesellschaft m.b.H., 3812 Gross Siegharts (AT)
(72) Erfinder: SCHNEIDER, Willi, D-85057 Ingolstadt (DE)
(74) Vertreter: Prüfer, Lutz H., Dipl.-Phys.
(86) Internationale Anmeldenummer: EP9302118
(87) Internationale Veröffentlichungsnummer: WO9404858

(56) Entgegenhaltungen:
- CH-A- 390 017
- GB-A- 633 005
- US-A- 2 622 613

## Beschreibung

Die vorliegende Erfindung bezieht sich auf ein Ventil nach dem Oberbegriff des Patentanspruches 1. Ein derartiges Ventil wird insbesondere für den Einsatz in Fluidsystemen, beispielsweise in Luftfahrzeug-Schmierstoffsystemen verwendet.

Die Druck-/Durchfluß-Charakteristik von in Fluidsystemen eingesetzten Ventilen weist ein konstruktionsbedingtes spezielles Öffnungsverhalten auf. Im Moment des Öffnungsbeginnes des Ventiles sind die in Ströhmungsrichtung des Fluids auf den Ventilkolben einwirkenden Kräfte größer als die entgegen der Strömungsrichtung wirkenden vorgegebenen Kräfte, die den Öffnungsbeginn festlegen. Es handelt sich dabei insbesondere um die Federspannung eines federvorgespannten Ventiles. Idealerweise wird der Ventilkolben soweit in Strömungsrichtung verschoben, bis ein Kräftegleichgewicht eintritt. Realerweise tritt jedoch ein übersteuerndes Öffnungsverhalten auf, das durch Strömungseinflüsse am Ventilkolben verursacht wird. Insbesondere tritt ein sogenannter Öffnungssprung auf. Dasselbe Phänomen wird auch beim Schließen beobachtet. Durch das Übersteuern tritt ein sogenannter Schließsprung auf.

Diese übersteuernde Öffnungs-/Schließverhalten können zu unerwünschten Druck- und Durchflußpulsationen führen. Zur Vermeidung derartiger Pulsationen werden bisher vorgesteuerte Ventile benutzt. Der Einsatz vorgesteuerter Ventile beansprucht jedoch mehr Bauraum, da ein zweites Ventil, nämlich das Vorsteuerventil, eingebaut oder in das Hauptventil integriert werden muß. Der konstruktive Aufwand ist deutlich größer. Dies führt auch zu höheren Kosten. Auch bei vorgesteuerten Ventilen ergibt sich ein übersteuerndes Öffnungs- und Schließverhalten in der Druck-/Durchflußeigenschaft, dessen Größe ist jedoch durch die Kräfteverteilung auf Vor- und Hauptventil reduziert.

Aus der US-A-2,622,613 ist ein Ventil nach dem Oberbegriff des Patentanspruchs 1 bekannt.

Der Erfindung liegt daher die Aufgabe zugrunde, ein Ventil der eingangs beschriebenen Art vorzusehen, bei dem ein Öffnungs- und Schließverhalten ohne Druck- und Durchflußpulsationen ohne zusätzliche Vorsteuerung weiter verbessert wird.

Diese Aufgabe wird gelöst durch ein Ventil der eingangs beschriebenen Art, das durch die kennzeichnenden Merkmale des Patentanspruches 1 gekennzeichnet ist.

Bevorzugte Ausgestaltungen der Erfindung sind in den Unteransprüchen gekennzeichnet.

Bei dem erfindungsgemäßen Ventil werden die Strömungseinflüsse am Ventilkolben durch die Strömungsumlenkung am Ventilkolben so beeinflußt, daß die axial, entgegen der Öffnungsrichtung wirkende, resultierende Impulskraft in ihrer Wirkung auf das Öffnungs- und Schließverhalten reduziert wird. Dadurch wird der Öffnungs- und Schließsprung weitestgehend eliminiert. Das erfindungsgemäße Ventil erhöht die Zuverlässigkeit des Systems, in dem es eingesetzt ist, durch Steigerung der Betriebssicherheit.

Es folgt die Beschreibung eines Ausführungsbeispieles anhand der Figuren. Von den Figuren zeigt:
- Fig. 1: schematisch ein Luftfahrzeug-/Schmierstoffsystem und
- Fig. 2: eine vergrößerte Schnittansicht des in Fig. 1 gezeigten Druckbegrenzungsventiles.

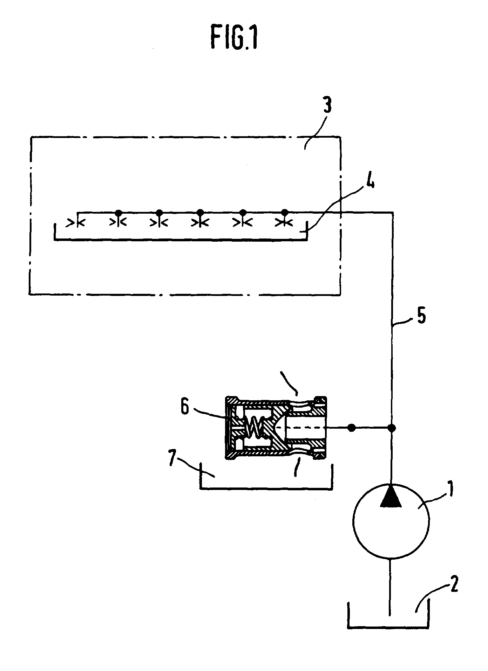

Wie aus Fig. 1 ersichtlich ist, wird ein hier in Rede stehendes Ventil insbesondere in einem Luftfahrzeug-Schmierstoffsystem eingesetzt. Dieses umfaßt eine Schmierstoffpumpe 1, die eingangsseitig mit einem Schmierstofftank 2 und ausgangsseitig mit einem Schmierstoffverteilsystem 3, über den der Schmierstoff einem Tank 4 zugeführt wird, verbunden ist. In der den Ausgang der Schmierstoffpumpe 1 mit dem Schmierstoffverteilsystem 3 verbindenden Leitung 5 ist ein Druckbegrenzungsventil 6 vorgesehen. Dieses mündet ausgangsseitig in einen Auffangtank 7.

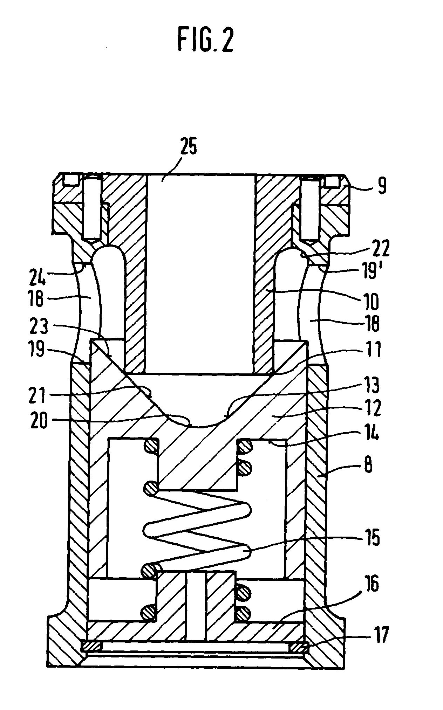

Das Druckbegrenzungsventil 6 ist in Fig. 2 in Vergrößertem Maßstab gezeigt. Es weist ein im wesentlichen zylinderförmig ausgebildetes Gehäuse 8 auf. An seinem einen Ende ist ein Hohlzylinder koaxial angeordnet, der an seinem außenliegenden Ende einen ringförmigen Flansch 9 aufweist, mit dem er mit dem Gehäuse 8 fest verbunden ist. Dieses außenliegende Ende bildet den Eingang 25 des Ventilkanales. An seinem dem Flansch 9 gegenüberliegenden Ende des Zylinders ist der Ventilsitz 10 ausgebildet. Dieser weist, wie aus Figur 2 deutlich zu sehen ist, an seiner den eigentlichen Ventilsitz bildenden Fläche eine Kante 11 auf, die zum Zusammenwirken mit dem Ventilkörper vorgesehen ist.

Auf der dem Zylinder gegenüberliegenden Seite des Gehäuses ist ebenfalls koaxial ausgerichtet ein Ventilkörper 12 vorgesehen. Dieser weist auf seiner dem Ventilsitz 10 zugewandten Seite eine mit diesem zusammenwirkende Oberfläche 13 auf. Der Ventilkörper 12 ist auf der der Oberfläche 13 abgewandten Seite als Hohlzylinderkolben ausgebildet. Mit seiner Wandung gleitet der Ventilkörper 12 in dem Inneren des Gehäuses 8. Der Grund 14 des Hohlzylinderkolbens bildet das Widerlager für eine Druckfeder 15, die mit ihrem gegenüberliegenden Ende an einem Widerlager 16 anliegt, welches mittels eines Sperringes 17 an dem dem Flansch 9 gegenüberliegenden Ende des Gehäuses 8 festgehalten ist.

Wie am besten aus Fig. 2 ersichtlich ist, ist ein Ausgang 18 mit Ausgangsöffnungen 19 vorgesehen, der in geöffnetem Zustand mit dem Ventilkanal des Zylinders des Ventilsitzes 10 verbunden ist.

Die Oberfläche 13 des Ventilkörpers 12 ist nichteben ausgebildet. Bevorzugt weist sie einen koaxial angeordneten, sphärischen Abschnitt 20 und einen in radialer Richtung nach außen daran anschließenden kegelförmigen Abschnitt 21 auf. Der Winkel des kegelförmigen Abschnittes liegt bevorzugt in der Größenordnung von 75 bis 110 ° und ganz besonders bevorzugt in der Größenordnung von 80 bis 100 °.

Wie aus Fig. 2 ersichtlich ist, wirkt mit dieser konkaven Oberfläche 13 die äußere Kante 11 des Ventilsitzes 10 zusammen. Die Bemessung für den die wirksame Kante tragenden Zylinder erfolgt dabei derart, daß in Projektion senkrecht zur Mittenachse der Oberfläche 13 das Verhältnis des Radius von der Mitte bis zur Stelle des Kontaktes mit der Kante 11 zu der radialen Ausdehnung von der Kante bis zum freien Ende der Oberfläche 13 etwa 2 : 1 beträgt.

Wie am besten aus Fig. 2 ersichtlich ist, ist in dem Abschnitt zwischen der mit der Oberfläche 13 zusammenwirkenden Kante 11 und der Ausgangsöffnung 19 eine Ausnehmung 22 vorgesehen. Diese liegt auf der, von dem durch die Kante 11 begrenzten äußeren Abschnitt 23 der Oberfläche 13 in koaxialer Richtung gesehen, gegenüberliegenden Seite der Austrittsöffnung 19 und erstreckt sich vorzugsweise über deren in Eingangsrichtung sich erstreckenden Rand 24 hinaus. Die Ausnehmung weist vorzugsweise eine konkave Form auf. In dem gezeigten Ausführungsbeispiel, bei dem zwei symmetrisch angeordnete Austrittsöffnungen 19, 19' vorgesehen sind, ist die Ausnehmung 22 als Ringraum ausgebildet.

Im Betrieb ist zunächst der Durchgang zwischen Eingang 25 und Ausgang 18 geschlossen, denn der Ventilkörper 12 sitzt durch die Federvorspannung auf der Kante 11 des Ventilsitzes 10.

Bei Überschreiten eines durch die Druckfeder 15 vorgegebenen Druckes hebt der Ventilkörper 12 von dem Ventilsitz 10 ab und öffnet damit den Durchgang zwischen Eingang 25 und Ausgang 18. Der Schmierstoff prallt auf die Oberfläche 13, wird dort nach außen mit einer Komponente in Richtung entgegengesetzt zur Eingangsrichtung umgelenkt und tritt durch den Spalt zwischen Kante 11 und Oberfläche 13 nach außen hindurch. Ein Teil des hindurchtretenden Schmierstoffes tritt in den Ringraum 22 und bewirkt, daß sowohl durch das Beaufschlagen des Grundes des Ringraumes als auch durch die dort entstehende Verwirbelung eine entgegen der Öffnungsrichtung wirkende resultierende Impulskraft auftritt. Anschließend tritt die Flüssigkeit durch die Öffnung nach außen.

In einer alternativen Ausführungsform kann zu dem Punkt auch der Durchmesser der Ausgangsöffnung 19 so klein gewählt werden, daß eine vorgegebene Drosselwirkung entsteht. Auch eine Kombination von Ausnehmung bzw. Ringraum 22 und einer Verkleinerung des Durchmessers der Ausgangsöffnungzum Erzielen einer vorbestimmten Drosselwirkung ist möglich. In der gezeigten Ausführungsform ist der Druchmesser der Ausgangsöffnung 19 so gewählt, daß diese selbst keine Drosselwirkung zeigt.

In einer abgewandelten Ausführungsform kann die Oberfläche 13 auch als eine im Axialschnitt sphärische Oberfläche oder kegelförmige Oberfläche oder hyperbolische Oberfläche ausgebildet sein. Ferner kann die Oberfläche auch als konvexe Oberfläche ausgebildet sein, wobei die Schnittform dann entsprechend mit sphärischem Mittelteil und kegelförmigem Außenabschnitt, als spärischer Abschnitt bzw. kegelförmiger Abschnitt ausgebildet sein kann. In einem solchen Fall wirkt dann die innenliegende Kante des Ventilsitzes 10 mit der Oberfläche des Ventilkörpers 12 zusammen.

Für die Erfindung ist es wesentlich, daß das Zusammenwirken zwischen Ventilsitz 10 und Ventilkörper 12 nach Art einer viskositätsunabhängigen Blende wirkt und nicht als Drossel, weshalb die Kante 11 des Ventilsitzes 10 bedeutsam ist.

Die Breite des Ringkanales 22 ist im wesentlichen gleich der auf den Durchmesser projizierten Abtandes, um den die Oberfläche des Ventilkörpers 12 über den Ventilsitz 10 hervorsteht.

## Patentansprüche

1. Ventil mit einem Gehäuse (8), einem Ventilsitz (10) mit einem Eingang (25) und einem mit dem Ventilsitz (10) verbundenen Ausgang (18), einem dem Ventilsitz (10) gegenüberliegenden vorgespannten Ventilkörper (12), dessen mit dem Ventilsitz (10) zusammenwirkende Oberfläche (13) nicht eben ausgebildet ist und in Schließstellung so am Ventilsitz (10) anliegt, daß ein Teil (23) der Oberfläche (13) zum Ausgang (18) hin hervorsteht, und mit ausgangsseitig des Ventilsitzes vorgesehenen Mittel (19, 22) zum Erzielen einer vorbestimmten Drosselwirkung dadurch gekennzeichnet daß der Ausgang (18) eine Ausgangsöffnung (19) und eine vor diesem angeordnete und auf der dem Ventilkörper (12) abgewandten Seite liegende Ausnehmung (22) aufweist, wobei die vorbestimmte Drosselwirkung durch die Ausnehmung (22) und/oder die Bemessung des Durchmessers der Ausgangsöffnung (19) erreicht wird und wobei die Erstreckung der Ausnehmung (22) in radialer Richtung der Größe des hervorstehenden Teiles (23) entspricht.

2. Ventil nach Anspruch 1, dadurch gekennzeichnet, daß der Ausgang (18) eine Ausgangsöffnung (19) aufweist, dessen Durchmesser so klein gewählt ist, daß die vorgegebene Drosselwirkung entsteht.

3. Ventil nach Anspruch 1 oder 2, dadurch gekennzeichnet, daß die Ausnehmung (22) als Ringraum ausgebildet ist.

4. Ventil nach einem der Ansprüche 1 bis 3, dadurch gekennzeichnet, daß in Schließstellung das Verhältnis der Erstreckung des hervorstehenden Teiles (23) zum inneren Teil in Projektion etwa 1/3 zu 2/3 beträgt.

5. Ventil nach einem der Ansprüche 1 bis 4, dadurch gekennzeichnet, daß die dem Ventilkörper (12) gegenüberliegende Fläche des Ventilsitzes (10) eine in Schließstellung auf diesem aufsitzende Kante (11) aufweist.

6. Ventil nach einem der Ansprüche 1 bis 5, dadurch gekennzeichnet, daß die Oberfläche (13) konkav oder konvex ausgebildet ist.

7. Ventil nach einem der Ansprüche 1 bis 5, dadurch gekennzeichnet, daß der Axialschnitt der Oberfläche (13) hyperbelförmig oder dreieckförmig ist.

8. Ventil nach einem der Ansprüche 1 bis 5, dadurch gekennzeichnet, daß die Oberfläche (13) einen sphärischen Mittelabschnitt und einen diesen umgebenden kegelförmigen Abschnitt aufweist.

## Claims

1. A valve with a casing (8), a valve seat (10) with an inlet (25) and with an outlet (18) connected to the valve seat (10), a prestressed valve body (12) lying opposite the valve seat (10), whose surface (13) cooperating with the valve seat (10) is formed so as not be planar and bears in the closed position on the valve seat (10) in such a way that a portion (23) of the surface (13) projects towards the outlet (18), and with means (19, 22) provided on the outlet side of the valve seat for obtaining a predetermined throttling action, characterized in that the outlet (18) has an outlet opening (19) and a recess (22) arranged ahead of the outlet and lying on the side remote from the valve body (12), in which arrangement the predetermined throttling action is obtained by the recess (22) and/or the dimensioning of the diameter of the outlet opening (19), and in which arrangement the reach of the recess (22) in the radial direction corresponds to the size of the projecting portion (23).

2. A valve according to claim 1, characterized in that the outlet (18) has an outlet opening (19) whose diameter is chosen to be so small that the predetermined throttling action is obtained.

3. A valve according to claim 1 or 2, characterized in that the recess (22) is designed as an annular space.

4. A valve according to one of claims 1 to 3, characterized in that in the closed position, the ratio of the reach of the projecting portion (23) to the internal part amounts in projection to approximately 1/3 to 2/3.

5. A valve according to one of claims 1 to 4, characterized in that the face of the valve seat (10) lying opposite the valve body (12) has an edge bearing on the latter in the closed position.

6. A valve according to one of claims 1 to 5, characterized in that the surface (13) as a concave or convex shape (7).

7. A valve according to one of claims 1 to 5, characterized in that the axial section of the surface (13) has a hyperbolic or triangular shape.

8. A valve according to one of claims 1 to 5, characterized in that the surface (13) has a spherical central section and a conical section surrounding the latter.

## Revendications

1. Soupape pourvue d'un logement (8), d'un siège de soupape (10) avec une entrée (25) et une sortie (18) reliée au siège de soupape (10), un corps de soupape (12) précontraint faisant face au siège de soupape (10), dont la surface (13) coopérant avec le siège de soupape n'est pas de conformation plane et s'appuie sur le siège de soupape (10) dans la position fermée de telle sorte qu'une partie (23) de la surface (13) fait saillie vers la sortie (18), et comprenant des moyens (19, 22) prévus du côté de la sortie du siège de soupape et destinés à obtenir un effet d'étranglement prédéterminé, caractérisée en ce que la sortie (18) présente une ouverture de sortie (19) et un évidement (22) situé avant celle-ci et du côté opposé au corps de soupape (12), l'effet d'étranglement prédéterminé étant obtenu par l'évidement (22) et /ou le dimensionnement du diamètre de l'ouverture de sortie (19), et l'étendue de l'évidement (22) dans le sens radial correspondant à la taille de la partie (23) en saillie.

2. Soupape selon la revendication 1, caractérisée en ce que la sortie (18) présente une ouverture de sortie (19) dont le diamètre est assez petit pour obtenir l'effet d'étranglement souhaité.

3. Soupape selon la revendication ou 2, caractérisée en ce que l'évidement (22) est réalisé sous forme d'un espace annulaire.

4. Soupape selon l'une ou l'ensemble des revendications 1 à 3, caractérisée en ce que dans la position fermée, le rapport entre l'étendue de la partie en saillie (23) et la partie intérieure en saillie est d'environ 1/3 pour 2/3.

5. Soupape selon l'une ou l'ensemble des revendications 1 à 4, caractérisée en ce que la surface du siège de soupape (10) faisant face au corps de soupape (12) présente dans la position fermée une arête (11) qui repose sur celui-ci.

6. Soupape selon l'une ou l'ensemble des revendications 1 à 5, caractérisée en ce que la surface (13) est de forme concave ou convexe.

7. Soupape selon l'une ou l'ensemble des revendications 1 à 5, caractérisée en ce que la section axiale de la surface (13) est en forme d'hyperbole ou triangulaire.

8. Soupape selon l'une ou l'ensemble des revendications 1 à 5, caractérisée en ce que la surface (13) présente une partie médiane sphérique et une partie conique entourant celle-ci.
